Europäisches Patentamt

European Patent Office

Office européen des brevets

(19)

(11) Veröffentlichungsnummer : **0 034 218**
B1

(12)                    # EUROPÄISCHE PATENTSCHRIFT

(45) Veröffentlichungstag der Patentschrift :
30.12.86

(51) Int. Cl.⁴ : **G 03 B 21/00**, G 03 B 23/00

(21) Anmeldenummer : **80107958.3**

(22) Anmeldetag : **17.12.80**

(54) **Projektor für Filme, Diapositive oder dergl.**

(30) Priorität : **18.12.79 DE 2950889**

(43) Veröffentlichungstag der Anmeldung :
**26.08.81 Patentblatt 81/34**

(45) Bekanntmachung des Hinweises auf die Patenterteilung : **30.12.86 Patentblatt 86/52**

(84) Benannte Vertragsstaaten :
**CH FR GB IT LI**

(56) Entgegenhaltungen :
**CH-A-   218 509**
**DE-A- 2 607 950**
**DE-C-   290 138**
**FR-A- 1 373 973**
**FR-A- 2 041 352**
**GB-A-   892 809**
**US-A- 2 341 223**
**US-A- 3 049 971**

(73) Patentinhaber : **Schrader, Hellmut**
**Am Hüttenkrug 12**
**D-3057 Neustadt (DE)**

(72) Erfinder : **Schrader, Hellmut**
**Am Hüttenkrug 12**
**D-3057 Neustadt (DE)**

## Beschreibung

Die Erfindung betrifft einen Projektor für Filme, Diapositive oder dergleichen, wie er im Oberbegriff des Anspruchs 1 definiert ist.

Ein solcher Projektor ist aus dem Dokument GB-A-892 809 bekannt.

Bei bekannten Projektoren dieser Bauart besteht der Sockel aus einer Platte mit Halterungen für den Projektor und mit Haken, Vorsprüngen oder dgl., in die Verschlußteile der Haube eingreifen. Der Projektor ist eine Baueinheit, die alle für ihren Betrieb erforderlichen Teile wie Energieversorgung, Lichtquelle, Optik etc. einschließt und auch gesondert vom Sockel betrieben werden kann. Solche Projektoren sind meist recht schwer. Es ist auch bekannt, Dia-Projektoren mit Magazinen zu versehen und die Dias nacheinander fernsteuerbar zu projizieren und dabei die Schärfe zu variieren. Solche Projektoren sind umfangreich und werden meist in gesonderte Koffer eingesetzt. Sie werden zur Vorführung auf Spezialtische gesetzt. Höhenverstellungen des Bildes erfolgen meist durch Verstellen der Winkellage des Projektors und bewirken dadurch Trapezfehler.

Der Erfindung liegt die Aufgabe zugrunde, einen Projektor zu schaffen, der durch Abnahme der Haube betriebsbereit ist, also nicht aus einem Koffer herausgehoben werden muß und der ein so kleines Gewicht hat, daß er mit Untergestellen leichter Bauart betrieben und ohne Aufwendung großer Kräfte auf die erwünschte Höhe gestellt werden kann. Diese Aufgabe wird durch die im Anspruch 1 gekennzeichneten Merkmale gelöst. Weiterbildungen der Erfindung sind in den Unteransprüchen beschrieben.

Zur näheren Erläuterung der Erfindung wird im folgenden ein Ausführungsbeispiel an Hand der Zeichnung beschrieben. Diese zeigt in

Figur 1   den Längsschnitt eines Projektors

Figur 2   den Projektor gemäß Fig. 1 in Betriebsstellung

Figuren 3-8   Teilansichten.

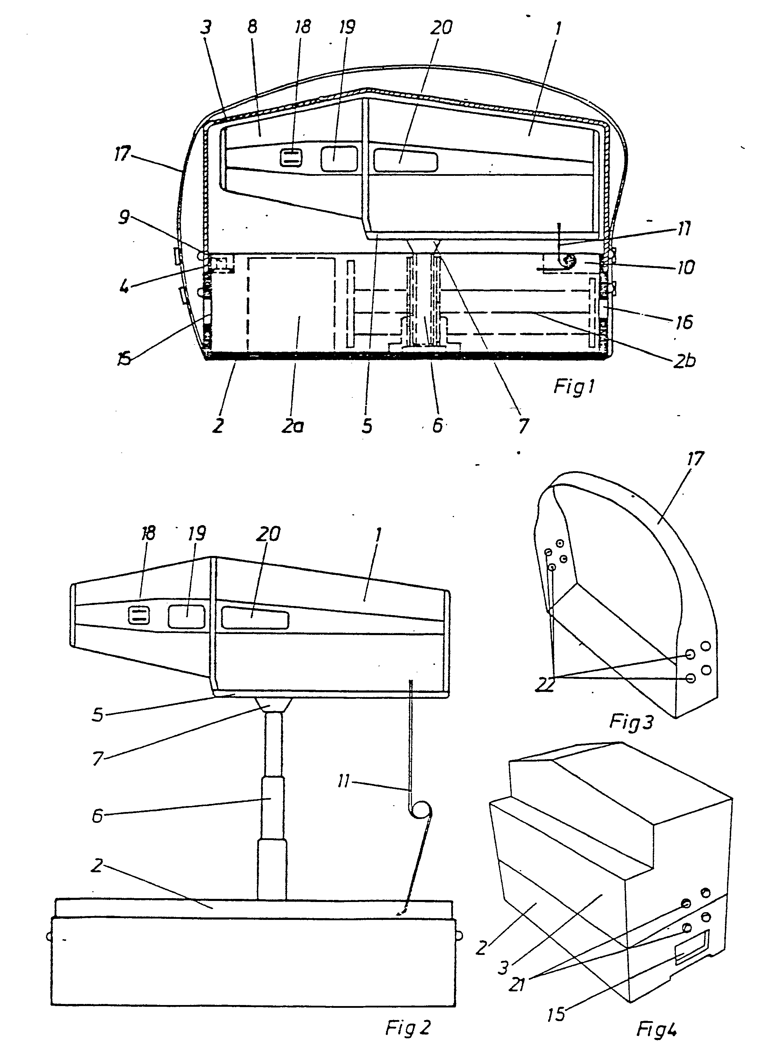

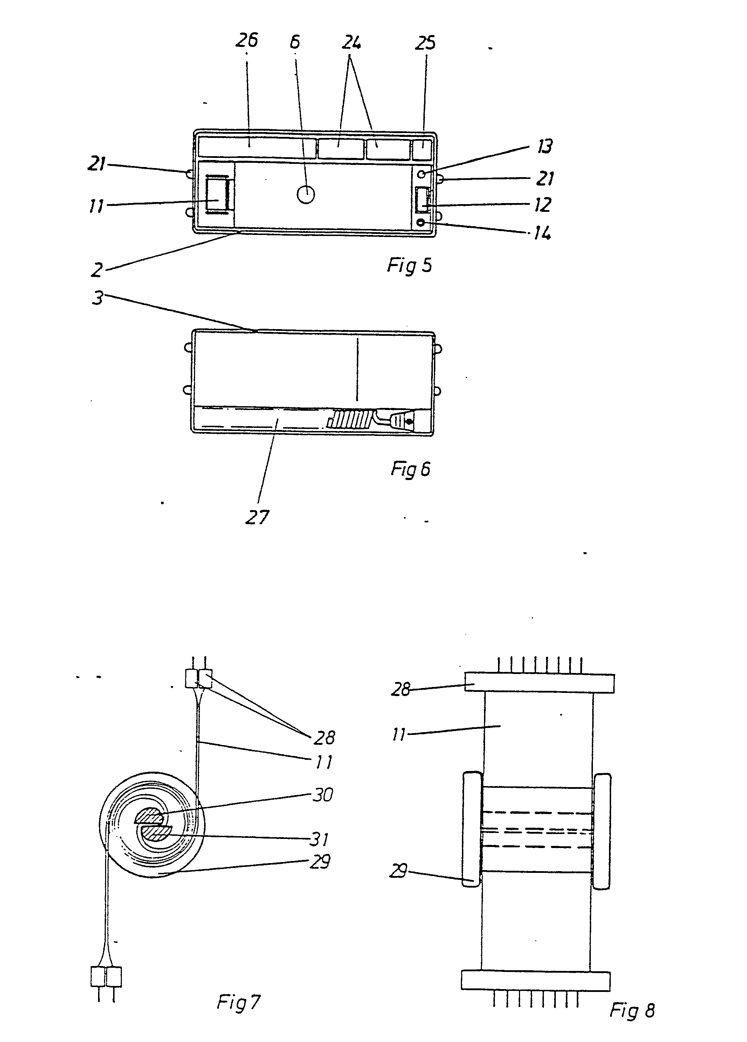

In Fig. 1 ist ein für den Transport zusammengesetzter Projektor mit einem Unterteil 2 und einer Haube 3 dargestellt, die über einen Projektionsteil 1 gestülpt und an der Oberseite 4 des Unterteils 2 lösbar befestigt ist. Das Projektionsteil 1 enthält Lichtquelle und Optik sowie die zur Film- bzw. Dia-Bewegung und Einstellung notwendigen Einrichtungen. Im Unterteil 2 sind die Energieversorgung 2a und auswechselbare Steuereinrichtungen 2b für Filmbewegung und Schärfeeinstellung angeordnet. Der Projektionsteil 1 ist zum Unterteil 2 höhenverstellbar angeordnet. Zu diesem Zweck ist das Projektionsteil 1 direkt oder über eine Deckplatte 5 auf einem Teleskopbein 6 gelagert, das im Unterteil 2 befestigt ist. Die Deckplatte 5 kann auch durch Ausbildung des Teleskop-Oberteils 7 ergänzt oder ersetzt werden. Innerhalb des Teleskopbeins 6 können Steuer- und Stromkabel angeordnet sein. Die Höhenverstellbarkeit ist manuell oder fernsteuerbar möglich. Im Unterteil 2 ist ein Raum vorgesehen, der für die Unterbringung z. B. eines Kabels 27, z. B. der Netzschnur ausgenutzt werden kann (Fig. 6). Unterhalb der Deckplatte 5 weist der Unterteil 2 einen Behälter 10 für die Aufnahme eines Verbindungskabels 11 auf. Das Verbindungskabel 11 ist vorzugsweise selbstaufrollend ausgebildet und paßt sich so stets der Höhenlage des Projektionsteils 1 relativ zum Unterteil 2 an. Es ist als Flachbahnkabel bifilar ausgebildet. An der Vorderseite des Unterteils 2 ist ein Raum 9 für die Unterbringung des Netzschalters 12, der Sicherung 13 sowie weiterer Einstellmittel 14 vorgesehen (Fig. 5). Das Unterteil 2 ist mit Öffnungen 15, 16 für die Aufnahme eines Netzsteckers bzw. Fernbedienungssteckers versehen. Im zusammengesetzten Zustand sind diese Öffnungen durch einen Trag- und Verbindungsriemen 17 verdeckt. Haube 3 und Unterteil 2 sind so ausgebildet, daß sie zusammen einen geschlossenen, den Projektionsteil 1 umhüllenden Koffer bilden. Die Haube 3 kann mit einem Koffergriff versehen werden. Der Projektionsteil 1 ist an seinem vorderen Ende beidseitig mit Sensorschaltern 18 für den Filmeinlaufantrieb versehen, die Rechts- oder Linkslauf einschalten, je nachdem, ob die den Film enthaltende Kassette an der rechten oder linken Aufnahme 19 angesetzt wird. Im hinteren Teil des Projektionsteils 1 ist eine Griffmulde 20 vorgesehen, die das manuelle Anheben des Projektionsteils erleichtern soll. Diese Mulde 20 kann zugleich vertikale Entlüftungsbohrungen aufweisen.

Fig. 2 zeigt den Projektor in Betriebsstellung mit hochgefahrenem Projektionsteil 1. Das bifilar aufgewickelte Flachbahnkabel 11 ist in Fig. 1 aufgerollt und in Fig. 2 entrollt dargestellt. Statt eines solchen Flachbahnkabels 11 kann auch innerhalb des Teleskops 6 ein längenveränderliches Kabel geeigneter Bauart vorgesehen werden.

Der gemäß Fig. 2 hochgefahrene Projektionsteil 1 kann von Hand oder motorisch um die Achse des Teleskops 6 gedreht werden. Sowohl das Teleskop 6 als auch das Kabel 11 oder ein im Teleskop 6 angeordnetes Kabel lassen eine solche Drehung ohne zusätzliche Maßnahmen zu. Bei motorischer Verstellung kann der zusätzliche Aufwand relativ gering gehalten werden.

Fig. 3 zeigt den Riemen 17 mit Befestigungsknöpfen 22, die mit entsprechenden Knöpfen von Unterteil 2 und Haube 3 zusammenwirken. Der Riemen 17 wird während des Betriebes des Projektors ganz abgenommen.

Fig. 4 zeigt die Ausbildung des geschlossenen Koffers 2, 3 ohne Riemen 17. Bei dieser Abbildung sind die mit den Befestigungsknöpfen 22 zusammenwirkenden Knöpfe 21 deutlich sichtbar wie auch eine Aussparung am Boden des Unterteils 2 für die Lagefixierung des Riemens 17.

Fig. 5 zeigt eine Draufsicht auf das Unterteil 2. Deutlich sichtbar sind das Teleskop 6 sowie Räume 24 für Kassettenboxen (das sind Behälter für in DE-A-21 55 521 beschriebene Kassetten für unzerschnittene Filme), 25 für ein oder mehrere Leerkassetten und 26 für eine nicht gezeigte Fernbedienung.

Fig. 6 zeigt einen Blick von unten auf die Haube 3 mit einem Raum 27 für ein Netzkabel.

Fig. 7 und 8 zeigen in zwei Seitenansichten das aufgerollte Kabel 11 mit Steckern 28 und seitlichen Führungen 29 sowie Leisten 30 und 31, die das Mittelteil des zwischen den Steckern ungeteilten Kabels 11 so umfassen, daß sich das Kabel 11 bei Entspannung von selbst um die Leisten federartig aufrollt. Der Abstand der Teile 29 entspricht etwa der Kabelbreite.

## Patentansprüche

1. Projektor für Filme, Diapositive oder dgl., der ein Projektionsteil (1), ein das Projektionsteil tragendes Unterteil (2) und eine über das Projektionsteil (1) stülpbare Haube (3) umfaßt, wobei Haube (3) und Unterteil (2) zu einem geschlossenen Koffer verbindbar sind, im Unterteil (2) die Energieversorgung (2a) und Steuereinrichtungen (2b) bzw. -Schaltungen und im Projektionsteil (1) die Lichtquelle und Lichtführung, die Projektionsoptik (8), der Filmantrieb und Belüftungsmittel angeordnet sind, dadurch gekennzeichnet, daß das Projektionsteil (1) auf mindestens einem Teleskopbein (6) angeordnet ist, dessen unteres Ende am Unterteil (2) befestigt ist.

2. Projektor nach Anspruch 1, dadurch gekennzeichnet, daß in dem Teleskopbein (6) Verbindungskabel angeordnet sind, deren Länge sich mit der Länge des Teleskopbeins ändern.

3. Projektor nach Anspruch 1 oder 2, dadurch gekennzeichnet, daß das Teleskopbein (6) mit dem Projektionsteil (1) über eine Tragplatte (5, 7) verbunden ist.

4. Projektor nach einem der Ansprüche 1-3, dadurch gekennzeichnet, daß das Teleskopbein (6) stufenlos verstellbar ist.

5. Projektor nach einem der Ansprüche 1-4, dadurch gekennzeichnet, das im Unterteil (2) Räume oder Behälter (9, 10) für die Aufnahme von Kabeln (11), Schaltern (12, 13, 14) oder dgl. vorgesehen sind.

6. Projektor nach einem der Ansprüche 1-5, dadurch gekennzeichnet, daß das Projektionsteil (1) in der Achse des Teleskopbeines liegt.

7. Projektor nach einem der Ansprüche 1-6, dadurch gekennzeichnet daß im Unterteil (2) Öffnungen (15, 16) für die Aufnahme von Steckern vorgesehen sind, und daß die Öffnungen (15, 16) bei geschlossenem Koffer (2, 3) durch einen Tragriemen (17) verschlossen sind.

8. Projektor nach Anspruch 7, dadurch gekennzeichnet, daß der Tragriemen (17) ein geschlossener Riemen ist, auf dessen Unterseite das Unterteil (2) ruht.

9. Projektor nach Anspruch 8, dadurch gekennzeichnet, daß an der Kofferhaube (3) und am Unterteil (2) sowie an den entsprechenden Stellen des Tragriemens Druckknopfverbindungselemente (21, 22) vorgesehen sind.

10. Projektor nach einem der Ansprüche 1-9, dadurch gekennzeichnet, daß zwischen Projektionsteil (1) und Unterteil (2) ein Verbindungskabel in Form eines bifilar aufgewickelten Flachbahnkabels (11) mit parallel verlaufenden Einzeldrähten vorgesehen ist, das sich bei Änderung des Abstandes von Projektionsteil (1) und Unterteil (2) auf- bzw. abrollt.

## Claims

1. Projektor for films, diapositives or the like which includes a projection unit (1). a base portion carrying the projection unit (2) and a bonnet to be slipped over (3) with the bonnet (3) and the base portion (2) to be joined into a closed box and with the energy-supply device (2a) and handling control (2b) resp. circuit being arranged in the base portion (2) and the light source and light guidance, the projection optics (8), the film drive and the ventilation device in the projection unit (1), characterized by the projection unit (1) being arranged on at least one telescopic leg (6), whose lower part is fastened to the base portion (2).

2. Projector according to claim 1, characterized by connecting cables being arranged in the telescopic leg (6), whose length changes according to the length of the telescopic leg.

3. Projector according to claim 1 or 2, characterized by the telescopic leg (6) being connected with the projection unit (1) by a mounting plate (5, 7).

4. Projector according to one of claims 1-3, characterized by the telescopic leg (6) being steplessly adjustable.

5. Projector according to one of claims 1-4, characterized by the base portion (2) providing space or boxes (9, 10) for the storing of cables (11), switches (12, 13, 14) or the like.

6. Projector according to one of claims 1-5, characterized by the projection unit (1) being in the axis of the telescopic leg.

7. Projector according to one of claims 1-6, characterized by the base portion (2) providing openings (15, 16) for the keeping of plugs, and by the openings (15, 16) being shut by a carrying trap (17) when box (2, 3) is closed.

8. Projector according to claim 7 characterized by the carrying trap (17) being a closed one whose bottom side the base portion (2) rests upon.

9. Projector according to claim 8 characterized by the box bonnet (3) the base portion (2) and the corresponding parts of the carrying trap providing push-button connecting devices (21, 22).

10. Projector according to one of claims 1-9 characterized by a connecting cable in the form of a bifilar spooled flat bedwaycable (11) with single wires running parallel, which winds up resp. unwinds on variation of distance between projection unit (1) and base portion (2), being designed between projection unit (1) and base portion (2).

## Revendications

1. Projecteur pour pellicules, diapositives ou semblable comportant une partie de projections (1), un châssis (2) supportant la partie de projection et un bonnet (3) retroussable sur la partie de projection (1), le bonnet (3) et le châssis (2) pouvant être joints tel qu'on obtient un coffre clos. A l'intérieur du châssis (2) se trouvent l'approvisionnement énergétique (2a) et les mécanismes ou circuits de réglage et dans la partie de projection (1) pour situés la source lumière, l'optique de projection (8), l'impulsion du film et des moyens d'aération. Le projecteur est caractérisé par le fait que la partie de projection (1) repose sur au moins un pied télescopique (6) dont l'extrémité inférieure est fixée au châssis (2).

2. Projecteur d'après revendication 1, caractérisé par le fait que dans le pied télescopique (6) se trouvent des câbles de liaison dont la longueur varie selon la longueur du pied télescopique.

3. Projecteur selon revendication 1 ou 2, caractérisé par le fait que le pied télescopique (6) est lié à la partie de projection (1) à travers une plaque de soutien (5, 7).

4. Projecteur selon une des revendications 1-3, caractérisé par le fait que la longueur du pied télescopique (6) est variable sans gradations.

5. Projecteur selon une des revendications 1-4, caractérisé par le fait qu'à l'intérieur du châssis sont prévus des espaces ou des récipients pour accueillir des câbles (11), des commutateurs (12, 13, 14) ou du matériel similaire.

6. Projecteur selon une des revendications 1-5, caractérisé par le fait que la partie de projection (1) se trouve dans l'axe du pied télescopique.

7. Projecteur selon une des revendications 1-6, caractérisé par le fait que le châssis contient des ouvertures (15, 16) pour l'accueil de fiches et que les ouvertures (15, 16), le coffre (2, 3) étant clos, sont fermées par une bretelle (17).

8. Projecteur selon revendication 7, caractérisé par le fait que la bretelle (17) est une bretelle continue qui contourne tout le coffre (2, 3) et sur la partie inférieure de laquelle repasse le châssis (2).

9. Projecteur selon revendication 8, caractérisé par le fait que sur le bonnet (3) et sur le châssis (2) aussi qu'aux points respectifs de la bretelle sont prévus des éléments de fixation sur base de boutons-pression.

10. Projecteur selon une des revendications 1-9, caractérisé par le fait qu'entre partie de projection (1) et châssis (2) est prévu un câble de connexion sous forme d'un câble plat renvidé de manière bifilaire (11) et avec des fils métalliques singuliers parallèles qui, en cas de variation de la distance entre partie de projection (1) et châssis (2), respectivement se déroule ou s'enroule.

0 034 218

Fig 1

Fig 2

Fig 3

Fig 4

1

Fig 5

Fig 6

Fig 7

Fig 8